(19) **Europäisches Patentamt / European Patent Office / Office européen des brevets**

(11) **EP 2 481 181 B1**

(12) # FASCICULE DE BREVET EUROPEEN

(45) Date de publication et mention
de la délivrance du brevet:
**03.10.2018 Bulletin 2018/40**

(51) Int Cl.:
***H04L 5/00*** *(2006.01)*    ***H04B 3/54*** *(2006.01)*
***H04L 1/00*** *(2006.01)*

(21) Numéro de dépôt: **10747458.7**

(22) Date de dépôt: **27.08.2010**

(86) Numéro de dépôt international:
**PCT/EP2010/062583**

(87) Numéro de publication internationale:
**WO 2011/036026 (31.03.2011 Gazette 2011/13)**

(54) **PROCÉDÉ DE RÉDUCTION DES INTERFÉRENCES ENTRE UN PREMIER SIGNAL DE TYPE COURANT PORTEUR TRANSMIS ENTRE MODEMS D'UN RÉSEAU ÉLECTRIQUE ET UN SECOND SIGNAL TRANSMIS ENTRE MODEMS D'UN AUTRE RÉSEAU**

VERFAHREN ZUR INTERFERENZMINDERUNG ZWISCHEN EINEM ERSTEN ZWISCHEN MODEMS EINES STROMNETZES GESENDETEN TRÄGERSTROMSIGNAL UND EINEM ZWEITEN ZWISCHEN MODEMS EINES ANDEREN NETZES GESENDETEN SIGNAL

METHOD FOR REDUCING INTERFERENCES BETWEEN A FIRST CARRIER CURRENT SIGNAL TRANSMITTED BETWEEN MODEMS OF A POWER GRID AND A SECOND SIGNAL TRANSMITTED BETWEEN MODEMS OF ANOTHER GRID

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **25.09.2009 FR 0956639**

(43) Date de publication de la demande:
**01.08.2012 Bulletin 2012/31**

(73) Titulaire: **SAGEMCOM BROADBAND SAS**
**92500 Rueil Malmaison (FR)**

(72) Inventeur: **SAMY, Roger**
**92500 Rueil Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A1- 1 643 658    EP-A2- 1 830 535**
**US-A1- 2006 114 925**

- **KEE BONG SONG ET AL: "Dynamic Spectrum Management for Next-Generation DSL Systems", IEEE COMMUNICATIONS MAGAZINE, IEEE SERVICE CENTER, PISCATAWAY, US LNKD-DOI:10.1109/MCOM.2002.1039864, vol. 40, no. 10, 1 octobre 2002 (2002-10-01), pages 101-109, XP011092935, ISSN: 0163-6804**
- **MOROSI S ET AL: "A rate adaptive bit-loading algorithm for a DMT modulation system for in-building power-line communications", GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE LNKD-DOI:10.1109/GLOCOM.2005.1577658, vol. 1, 28 novembre 2005 (2005-11-28), pages 403-407, XP010879112, ISBN: 978-0-7803-9414-8**
- **ALASTAIR MCKINLEY ET AL: "An optimal multi-user, multi-service algorithm for Dynamic Spectrum Management in DSL", TELECOMMUNICATIONS, 2008. ICT 2008. INTERNATIONAL CONFERENCE ON, IEEE, PISCATAWAY, NJ, USA, 16 juin 2008 (2008-06-16), pages 1-5, XP031349931, ISBN: 978-1-4244-2035-3**

EP 2 481 181 B1

- WEI YU ET AL: "Distributed Multiuser Power Control forDigital Subscriber Lines", IEEE JOURNAL ON SELECTED AREAS IN COMMUNICATIONS, IEEE SERVICE CENTER, PISCATAWAY, US, vol. 20, no. 5, 1 juin 2002 (2002-06-01), XP011065508, ISSN: 0733-8716, DOI: DOI:10.1109/JSAC.2002.1003043
- YU W GINIS G CIOFFI J M ED - INSTITUTE OF ELECTRICAL AND ELECTRONICS ENGINEERS: "AN ADAPTIVE MULTIUSER POWER CONTROL ALGORITHM FOR VDSL", GLOBECOM'01. 2001 IEEE GLOBAL TELECOMMUNICATIONS CONFERENCE. SAN ANTONIO, TX, NOV. 25 - 29, 2001; [IEEE GLOBAL TELECOMMUNICATIONS CONFERENCE], NEW YORK, NY : IEEE, US, vol. 1, 25 novembre 2001 (2001-11-25), pages 394-398, XP002960543, DOI: DOI:10.1109/GLOCOM.2001.965146 ISBN: 978-0-7803-7206-1
- JOHN PAPANDRIOPOULOS ET AL: "SCALE: A Low-Complexity Distributed Protocol for Spectrum Balancing in Multiuser DSL Networks", IEEE TRANSACTIONS ON INFORMATION THEORY, IEEE, US, vol. 55, no. 8, 1 août 2009 (2009-08-01), pages 3711-3724, XP011264051, ISSN: 0018-9448
- CENDRILLON R ET AL: "Iterative spectrum balancing for digital subscriber lines", COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, vol. 3, 16 mai 2005 (2005-05-16), pages 1937-1941, XP010826210, DOI: DOI:10.1109/ICC.2005.1494677 ISBN: 978-0-7803-8938-0

**Description**

La présente invention concerne un procédé et dispositif de réduction des interférences entre un premier signal de type courant porteur, transmis entre modems sur un réseau électrique, et un second signal transmis entre modems d'un autre réseau.

Il est connu que des services numériques, tels que l'accès à Internet, la téléphonie par Internet ou encore la télévision haute définition, qui sont souvent regroupés par les opérateurs sous une offre appelée triple-play, peuvent être distribués chez les abonnés par plusieurs réseaux domestiques.

Pour cela, une passerelle domestique est installée chez l'abonné pour échanger des données de ces services avec un équipement du réseau externe à l'installation domestique. Les signaux porteurs de ces données sont alors transmis localement entre modems dont le type dépend de la technologie (norme) de transmission qui est mise en oeuvre.

Historiquement, la technologie ADSL (Asymmetric Digital Subscriber Line en anglais) a été la première à être utilisée mais la présente invention se situe dans le cas des technologies de communication haut débit qui peuvent être de type DSL, c'est-à-dire, par exemple, VDSL (Very high bit rate DSL en anglais) ou VDSL2 (ITU G.993.2), ou conformes à la recommandation G.hm mode DSL (ITU G. 9960) ou être de type courant porteur, c'est-à-dire conformes par exemple à la norme HomeplugAV (HomePlug PowerLine Alliance, "HomePlug AV baseline spécification," Version 1.0.00, Dec. 2005), ou à la recommandation G.hn mode courant porteur, ou être basées sur la technologie développée par les sociétés UPA/OPERA ou Panasonic.

Chaque technologie de communication haut débit regroupe un ensemble de traitements de signal pour que des données soient transmises entre deux modems, l'un émetteur et l'autre récepteur.

Côté émetteur, les données à transmettre sont, habituellement, codées selon un code correcteur d'erreurs de type FEC (Forward Error Code en anglais), puis les codes obtenus sont mis en correspondance avec un symbole d'une constellation d'une modulation de type QAM (Quadrature Amplitude Modulation en anglais) ou PSK (Phase Shift Keying en anglais). La longueur de ces symboles, appelés par la suite symboles QAM, dépend de la dimension de la constellation de la modulation retenue : 4QAM, 16QAM,..., BPSK (Binary Phase Shift Keying en anglais). Les bits de chaque symbole QAM sont ensuite répartis sur des fréquences allouées dites porteuses selon la technique connue sous le nom OFDM (Orthogonal Frequency Division Multiplexing en anglais). Les fréquences porteuses sont orthogonales entre elles et sont distribuées dans une bande de fréquence réservée selon un plan de fréquence prédéfini. Certaines technologies haut débit définissent plusieurs plans de fréquences susceptibles d'être utilisés pour répartir les fréquences porteuses.

La bande de fréquence réservée varie selon les technologies haut débit. Elle peut s'étendre, par exemple, de 2 à 30 Mhz pour la norme VDSL2 ou de 1 à 100 Mhz pour la recommandation ITU G.hn.

Les symboles OFDM ainsi obtenus sont alors transmis sur un canal de transmission du réseau. On peut noter que les caractéristiques de transmission d'un canal de transmission fluctuent dans le temps selon, entre autres, l'évolution de son environnement.

Côté récepteur, des symboles OFDM sont reçus et les données sont alors obtenues par une démodulation des symboles QAM selon la constellation utilisée à l'émetteur et suite à un décodage du code correcteur d'erreurs.

L'utilisation d'une technologie haut débit de type courant porteur pour la distribution de flux haut débit sur un réseau électrique domestique est largement reconnue aujourd'hui comme étant une technologie avantageuse du fait, entre autres, qu'elle utilise un réseau de distribution existant chez l'abonné et que la capacité de transmission sur ce type de canal de transmission, c'est-à-dire le débit de transmission sur ce canal, est élevée.

Toutefois, il a été observé que lorsqu'une technologie de type courant porteur était mise en oeuvre sur un réseau électrique local et qu'une autre technologie haut débit, de type DSL ou de type courant porteur, était mise en oeuvre sur un autre réseau local, des interférences se produisaient entre les signaux courant porteur transmis sur le réseau électrique et les signaux transmis par cet autre réseau.

Ces interférences se produisent lorsqu'une ligne du réseau électrique se trouve à proximité d'une ligne de cet autre réseau. En effet, comme ces technologies haut débit utilisent au moins partiellement la même bande de fréquence réservée, et le même procédé de codage de données par répartition sur des fréquences porteuses, en l'occurrence OFDM, lorsqu'une ligne du réseau électrique se trouve dans le voisinage d'une ligne de cet autre réseau, les performances de transmission du canal de transmission de chacun des deux réseaux se dégradent induisant, notamment, des pertes de débit de transmission sur ces deux réseaux.

Ces interférences sont amplifiées lorsque les modems des deux réseaux locaux sont alimentés par une même source électrique car, dans ce cas, un couplage par conduction entre les modems se produit.

L'utilisation du réseau électrique et d'un autre réseau pour la distribution des services d'une offre triple-play pose donc le problème d'interférence entre un signal courant porteur qui est transmis entre modems sur un réseau électrique et un signal qui est transmis sur un autre réseau qui peut être soit de type DSL, soit être un réseau électrique éventuellement distinct du premier.

Il est connu un procédé, appelé bit loading en anglais, pour coder les données d'un signal de type DSL par répartition sur des fréquences porteuses à partir de caractéristiques de transmission estimées d'un canal de transmission d'une ligne du réseau de type DSL.

Plus précisément, ce procédé itératif consiste à chaque itération à optimiser le débit de transmission du canal transmission sur la ligne et le niveau de puissance d'émission du signal transmis sur ce canal en considérant les interférences des autres lignes de ce réseau comme du bruit et sous la contrainte d'un profil de densité spectrale donné.

Le document EP-1830-525-A2 divulgue un procédé de réduction des interférences entre un réseau électrique et un autre réseau dans lequel le rapport signal-bruit d'une porteuse est modifié en adaptant le débit de transmission de ladite porteuse.

Deux approches sont généralement utilisées pour mettre en oeuvre un tel procédé.

Selon la première, le débit de transmission du canal de transmission d'une ligne du réseau de type DSL est maximisé sous la contrainte que la valeur maximale de puissance d'émission de chaque fréquence porteuse respecte le profil de densité spectrale donné.

Selon la seconde approche, le niveau de puissance d'émission de chaque fréquence porteuse est minimisé sous la contrainte d'un débit de transmission du canal de transmission d'une ligne fixé. Pour plus de détails sur ces deux approches, on peut se référer à l'article « Dynamic Spectrum Management for Next-Generation DSL systems », K. Song et al., IEEE Communications Magazine, October 2002.

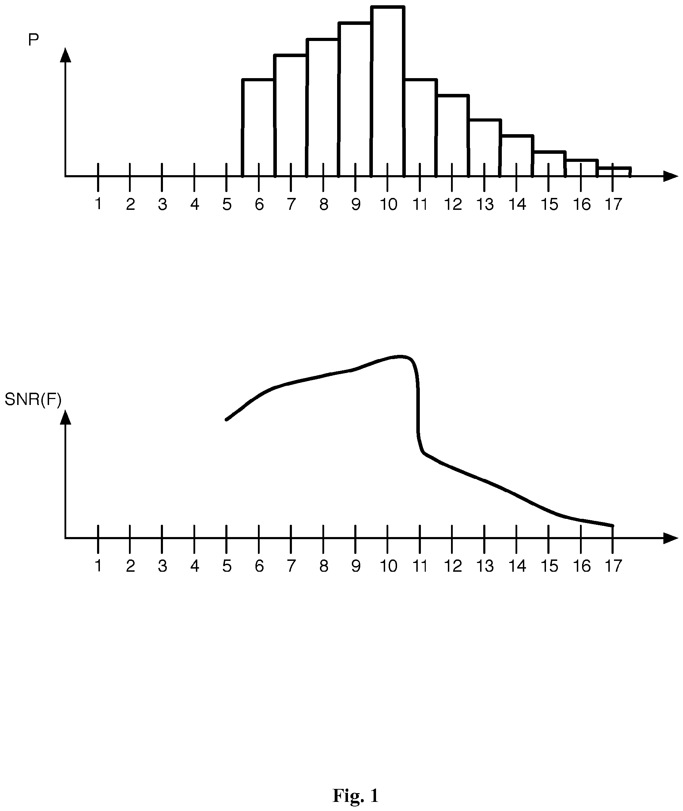

La Fig. 1 représente des chronogrammes illustrant un exemple de résultat de répartition de données d'un signal sur des fréquences porteuses à partir d'un rapport signal sur bruit SNR(F) estimé d'un canal de transmission. Le chronogramme du haut représente la densité spectrale de puissance d'émission P du signal en fonction des fréquences porteuses qui sont ici référencées 6 à 17. Un rectangle centré sur chaque fréquence porteuse représente la largeur de la bande de fréquence autour de chaque fréquence porteuse. Le chronogramme du bas représente un exemple de rapport signal sur bruit SNR(F) estimé sur le canal de transmission.

Selon cet exemple, le rapport signal sur bruit SNR(F) est très élevé notamment pour les fréquences porteuses 9 et 10 qui portent alors une part importante du signal. Il est très faible notamment pour les fréquences porteuses 14 à 17 qui portent alors une part relativement faible du signal.

Le procédé pour coder les données d'un signal de type DSL permet donc de réduire les interférences entre les signaux transmis entre deux lignes d'un réseau de type DSL. Toutefois, ce procédé nécessite que les signaux soient synchronisés dans le temps selon une même base de temps. Ce procédé n'est donc pas adapté pour réduire les interférences entre des signaux transmis sur deux réseaux qui n'ont aucune base de temps commune, tels que par exemple, deux réseaux électriques distincts ou un réseau électrique et un réseau de type DSL.

La version actuelle de la recommandation G.hn définit des spécifications que doivent respecter les modems des technologies haut débit qui seront prochainement utilisés pour la distribution des services triple-play chez un abonné, que cette distribution soit réalisée sur des paires métalliques téléphoniques, sur des câbles coaxiaux ou sur des lignes de puissance électrique afin que les signaux transmis sur ces différents supports interfèrent le moins possible les uns avec les autres.

Dans un réseau de type courant porteur, par exemple de type G.hn mode courant porteur, l'un des modems, appelé maître, joue un rôle particulier parmi les autres modems d'un même support de transmission. Ce modem maître agit en quelque sorte comme une tête de réseau en mémorisant les évènements liés aux autres modems, appelés esclaves, et en mettant en oeuvre, en outre, un procédé pour coder les données d'un signal de type courant porteur par répartition sur des fréquences porteuses à partir de caractéristiques de transmission d'un canal de transmission du réseau électrique relatif à un modem esclave. Ce procédé fait appel à un partage statique des ressources fréquentielles ou temporelles et à un mécanisme, connu sous le nom de power back-off en anglais, qui consiste à réduire au minimum le niveau de puissance d'émission en fonction des débits des données à transmettre. En conséquence, les fréquences porteuses et leurs niveaux de puissance sont déterminés indépendamment des caractéristiques de transmission du canal de transmission qui évoluent dans le temps.

Ainsi, un tel procédé ne prend pas en compte les interférences dues à une ligne d'un autre réseau qui pourraient surgir en cours de transmission des signaux.

Cette recommandation définit, entre autres, la couche physique de ces modems, les profils de densité spectrale maximale, et la bande de fréquence réservée parmi laquelle les fréquences porteuses sont choisies. Selon la version actuelle de cette recommandation, la bande de fréquence réservée s'étend de 1 Hz à 100 Mhz, l'occupation des fréquences porteuses, au nombre de 3960, est de 25 kHz et la densité de puissance d'émission est de -50dBm/Hz. De plus, cette recommandation préconise que la couche MAC d'un modem, couche de niveau supérieur à la couche physique selon le modèle OSI, fonctionne selon un mode qui est synchronisé par rapport à la fréquence du courant électrique alternatif délivré par le réseau électrique. Par la suite, nous appellerons ce type de mode de fonctionnement, un mode MAC.

De plus, une contribution à cette recommandation (ITU Document 09AG-061, Study Group 15, Atlanta Georgia, 20 February 2009) décrit qu'au cours d'un cycle MAC, un modem mesure le débit de transmission sur le canal de transmission, le rapport signal sur bruit et le bruit de fond pour chaque fréquence porteuse allouée.

Toutefois, cette contribution ne précise pas comment ces mesures peuvent être utilisées pour réduire les interférences entre un signal courant porteur et un signal transmis sur un autre réseau.

L'inventeur a observé que l'effet du couplage entre un réseau électrique et un autre réseau était pour l'essentiel dû aux niveaux élevés de puissance d'émission de certaines fréquences porteuses utilisées pour la transmission des symboles OFDM sur le réseau électrique. Par ailleurs il a observé que, malgré que les plans de fréquence des technologies de type DSL et courant porteur soient différents, les fréquences porteuses de ces plans de fréquences qui interfèrent les unes avec les autres avaient, le plus souvent, des valeurs communes c'est-à-dire soit identiques, soit de valeurs similaires.

Le problème résolu par la présente invention est donc de déterminer un procédé de réduction des interférences entre un premier signal de type courant porteur, transmis entre modems sur un réseau électrique, et un second signal transmis sur un autre réseau, de type DSL ou courant porteur, lesdits signaux étant codés par répartition des données sur des fréquences porteuses allouées d'une même bande de fréquence réservée.

A cet effet, le procédé comporte une étape de mesure par chaque modem du réseau électrique de caractéristiques de transmission de chaque fréquence porteuse susceptible d'être utilisée pour le codage du premier signal, une étape de détection, par analyse des caractéristiques de transmission mesurées, d'au moins une fréquence porteuse, dite seconde fréquence porteuse, qui est allouée pour coder le second signal et qui est commune avec au moins une fréquence porteuse dite première fréquence porteuse, qui est allouée pour le codage du premier signal, et dont les caractéristiques de transmission mesurées sont dégradées par rapport à celles d'une précédente mesure, et une étape d'optimisation de la répartition des données du premier signal sur des fréquences porteuses de manière à minimiser le niveau de puissance d'émission des premières fréquences porteuses qui sont communes avec les secondes fréquences porteuses ainsi détectées tout en optimisant le débit de transmission du premier signal.

Ainsi, à partir de mesures des caractéristiques de transmission des fréquences porteuses susceptibles d'être utilisées pour le codage du signal courant porteur, il est déterminé si ces fréquences porteuses interfèrent avec des fréquences porteuses du second signal de type DSL ou courant porteur. Il est ensuite déterminé quelles sont précisément ces fréquences porteuses en les comparant avec les fréquences porteuses susceptibles d'être utilisées pour coder le second signal. L'étape d'optimisation permet alors de répartir en priorité les données du premier signal sur des fréquences porteuses autres que celles qui viennent d'être ainsi détectées.

La présente invention concerne également un modem prévu pour mettre en oeuvre un tel procédé et un système de distribution de services haut débit comportant au moins un tel modem.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 représente des chronogrammes illustrant un exemple de résultat de répartition de données sur des fréquences porteuses à partir d'un rapport signal sur bruit estimé d'un canal de transmission,
La Fig. 2 représente une illustration d'un premier mode de réalisation du procédé,
La Fig. 3 représente un diagramme d'un algorithme itératif qui permet une optimisation concurrentielle des répartitions des données des signaux Se et S sur leurs fréquences porteuses,
La Fig. 4 représente une illustration de deux itérations de cet algorithme pour répartir les données des signaux Se et S de manière concurrentielle, et
La Fig. 5 représente un mode de réalisation de ce dispositif dans le cas d'un réseau électrique comprenant au moins un modem esclave et un modem maître.

De manière générale, la présente invention concerne un procédé de réduction des interférences entre un signal courant porteur Se transmis entre modems $M_{CPL}$ d'un réseau électrique Re et un signal S transmis entre modems M d'un autre réseau R.

Les signaux Se et S sont codés par répartition des données sur des fréquences porteuses allouées qui appartiennent toutes à une même bande de fréquence réservée BF tel que décrit dans la partie introductive. Les M fréquences porteuses allouées pour coder le signal Se sont notées $F_{1,m}$ (m=1 à M).

Le procédé comporte en outre une étape 1 de mesure par chaque modem $M_{CPL}$ du réseau électrique Re des caractéristiques de transmission de chaque fréquence porteuse $F$ susceptible d'être utilisée pour le codage du signal Se, une étape 2 de détection, par analyse des caractéristiques de transmission mesurées, d'au moins une fréquence porteuse $F_{2,n}$ qui est allouée ou susceptible de l'être pour coder le signal S et qui est commune avec au moins une fréquence porteuse $F_{1,m}$ qui est allouée pour le codage du signal Se et dont les caractéristiques de transmission mesurées sont dégradées par rapport à celles d'une précédente mesure, et une étape 3 d'optimisation de la répartition des données du signal Se sur des fréquences porteuses de manière à minimiser le niveau de puissance d'émission des fréquences porteuses $F_{1,m}$ qui sont communes avec les fréquences porteuses $F_{2,n}$ ainsi détectées tout en optimisant le débit de transmission du signal Se.

Au cours de l'étape 2, les caractéristiques de transmission peuvent être basées sur une propriété d'espacement qui peut être soit fixe, tel qu'égal à l'écart entre fréquences porteuses de type VDSL2 (4KHz ou 8kHz) ou variable en fonction du canal qui peut être de type courant porteur (PLT), coaxial ou téléphonique et/ou suivant les profils de ces canaux. Ceci permet de s'affranchir des bruits présents dans la bande de transmission lors des mesures des caractéristiques de transmission.

Selon une mise en oeuvre du procédé, l'étape 1 est mise en oeuvre par chaque modem esclave du réseau électrique et l'étape 2 est mise en oeuvre par un modem maître.

Selon cette mise en oeuvre, au cours de l'étape 1, chaque modem esclave $M_{CPL}$ mesure des caractéristiques de transmission sur chaque fréquence porteuse $F$ de la bande de fréquence réservée BF.

De préférence, les caractéristiques de transmission mesurées sur une fréquence porteuse $F$ sont le niveau de densité spectrale $P$ de cette fréquence porteuse, le gain $|H|^2$ et la variance $\sigma^2$ du canal complexe de transmission relatif à cette fréquence porteuse et le débit de transmission $R_1$ du signal Se.

Les mesures réalisées par chaque modem esclave sont ensuite transmises au modem maître.

Au cours de l'étape 2, le modem maître détecte si au moins une fréquence porteuse $F_{2,n}$ est commune avec une fréquence porteuse $F_{1,m}$ dont les caractéristiques de transmission mesurées sont dégradées par rapport à celles d'une précédente mesure.

Pour cela, le modem maître analyse les caractéristiques de transmission $P_{1,m}$, $|H_{1,m}|^2$ et $\sigma^2_{1,m}$ de chaque fréquence porteuse $F_{1,m}$ et le débit $R_1$ qu'il a reçu de chaque modem esclave.

Cette analyse consiste, par exemple, à calculer le rapport signal sur bruit $SNR(F_{1,m})$ de chaque fréquence porteuse $F_{1,m}$ par:

$$SNR(F_{1,m}) = \frac{P_{1,m} \left| H_{1,m} \right|^2}{\sigma^2_{1,m}}$$

et à comparer ce rapport signal sur bruit avec une valeur de ce rapport précédemment calculé à partir des caractéristiques de transmission précédemment mesurées.

Selon un autre exemple, le modem maître compare le débit de transmission $R_1$ avec un débit de transmission précédemment mesuré.

Lorsque les caractéristiques de transmission mesurées par un modem esclave sont dégradées par rapport à une précédente mesure, par exemple lorsque le débit de transmission mesuré $R_1$ est inférieur à un débit précédemment mesuré et/ou lorsque le rapport signal sur bruit $SNR(F_{1,m})$ est inférieur à une valeur de ce rapport calculé à partir des caractéristiques de transmission mesurées précédemment, le modem maître considère alors chaque fréquence porteuse allouée ou susceptible de l'être pour coder le signal S et détermine pour chacune d'entre elles si elle est commune avec une fréquence porteuse $F_{1,m}$. Si tel est le cas, cette fréquence porteuse est notée $F_{2,n}$.

Selon un mode de réalisation du procédé, une fréquence porteuse $F_{1,m}$ et une fréquence porteuse $F_{2,n}$ sont communes lorsqu'elles sont séparées l'une de l'autre d'une distance inférieure à une distance maximale prédéterminée qui peut être soit nulle, c'est-à-dire que les deux fréquences porteuses sont égales à une même valeur, soit supérieure à zéro au sens strict, c'est-à-dire que les deux fréquences porteuses ont des valeurs différentes mais proches.

De préférence, la distance est définie par la différence entre le sinus cardinal de la fréquence porteuse du signal S pondérée par un filtre qui limite les lobes secondaires du sinus cardinal, et le sinus cardinal de la fréquence porteuse du signal Se pondérée par un filtre qui limite les lobes secondaires du sinus cardinal.

Lorsqu'au moins une fréquence porteuse $F_{2,n}$ a été détectée au cours de l'étape 2, l'étape 2 se poursuit par l'étape 3 d'optimisation de la répartition des données du signal Se sur des fréquences porteuses de manière à minimiser le niveau de puissance d'émission des fréquences porteuses $F_{1,m}$ qui sont communes avec les fréquences porteuses $F_{2,n}$ ainsi détectées tout en optimisant le débit de transmission du signal Se.

Deux modes de réalisations de l'étape 3 sont maintenant présentés : le premier concerne le cas où le réseau R est un réseau de type DSL et le second concerne le cas où le réseau R est aussi un réseau électrique éventuellement distinct du réseau électrique Re.

Selon le premier mode de réalisation de l'étape 3, mis en oeuvre par le modem maître, chaque fréquence porteuse $F_{1,m}$, dont les caractéristiques de transmission mesurées sont dégradées par rapport à celles d'une précédente mesure et qui est commune avec une fréquence porteuse $F_{2,n}$, est remplacée par une nouvelle fréquence porteuse $F_{1,p}$ (p=1 à P) de la bande de fréquence BF. On peut noter que P est inférieur ou égal à M.

Il est avantageux que chaque nouvelle fréquence porteuse soit choisie dans une sous-bande de la bande de fréquence réservée BF dans laquelle aucune fréquence porteuse n'est allouée pour coder le signal S.

Par exemple, dans le cas où le réseau R est un réseau de type DSL, cette sous-bande s'étend de 30 à 100 MHz car cette nouvelle fréquence porteuse ne sera alors pas commune avec l'une quelconque des fréquences porteuses allouées ou susceptibles de l'être pour coder le signal S évitant ainsi toutes interférences entre les signaux Se et S.

Les données du signal Se qui étaient jusque là codées sur les P fréquences porteuses $F_{1,m}$ sont alors réparties sur ces nouvelles fréquences porteuses $F_{1,p}$ de manière à ce que le débit de transmission $R^*$ de ces nouvelles fréquences porteuses soit maximisé sous la contrainte que la valeur maximale de puissance d'émission de chaque nouvelle fréquence porteuse $F_{1,p}$ respecte un profil de densité spectrale spécifique $\overline{P}_1$, c'est-à-dire que la répartition des données est réalisée par résolution de l'équation suivante :

$$R^* = \max_{P_{1,p}} \sum_{p=1}^{P} \log_2 \left( 1 + \frac{P_{1,p} \left| H_{1,p} \right|^2}{\sigma_{1,p}^2 + \alpha + \beta \sqrt{F_{1,p}}} \right) \qquad (1)$$

sous la contrainte $\sum_{p=1}^{P} P_{1,p} \le \overline{P}_1,$ $\quad P_{1,p} \ge 0 \ \forall p$

dans laquelle $P_{1,p}$, $|H_{1,p}|^2$, $\sigma_{1,p}^2$ sont les mesures des caractéristiques de transmission d'une fréquence porteuse $F_{1,p}$ réalisées au cours de l'étape 1, et l'expression $\alpha + \beta \sqrt{F_{1,p}}$ représente une modélisation du couplage entre le réseau électrique Re et le réseau R. On peut noter que ce modèle du couplage est fonction de la fréquence porteuse, ce qui reflète la réalité.

Le couple de paramètres $(\alpha,\beta)$ est estimé par minimisation par moindre des mesures des caractéristiques de transmission de chaque fréquence porteuse F réalisées au cours de l'étape 1.

Dans le cas, les P fréquences porteuses $F_{1,p}$ permettent de coder les données codées jusque là sur les P fréquences porteuses $F_{1,m}$, c'est-à-dire que le débit de transmission du signal Se après remplacement des fréquences porteuses est égal au débit de transmission du signal Se préalablement mesuré par un modem esclave, l'étape 3 est terminée.

Dans le cas contraire, c'est-à-dire que si le débit de transmission du signal Se obtenu à l'issu de l'étape d'optimisation est inférieur à un débit de transmission préalablement mesuré de ce signal Se, au moins une autre fréquence porteuse $F_{1,c}$ (c=1 à C) est choisie dans la sous-bande complémentaire de la sous-bande. Dans le cas d'un réseau de type DSL, cette sous-bande complémentaire s'étend de 1 à 30 MHz.

Lorsque plus d'une fréquence porteuse $F_{1,c}$ est choisie dans la sous-bande complémentaire, ces fréquences porteuses sont choisies de manière à ce qu'une distance minimale les sépare et ce afin d'éviter toute interférence entre elles.

Les données du signal Se qui n'ont pu être codées sur les fréquences porteuses $F_{1,p}$ sont alors réparties sur ces fréquences porteuses $F_{1,c}$ de manière à minimiser le niveau de puissance émise $P_{1,c}$ de chaque fréquence porteuse $F_{1,c}$ sous la contrainte que le débit de transmission $R_1$ mesuré soit atteint, c'est-à-dire que les données du signal Se qui n'ont pu encore être codées le soit. La répartition des données est réalisée par résolution de l'équation suivante :

$$P^* = \min_{P_{1,c}} \sum_{c=1}^{C} P_{1,c} \qquad (2)$$

sous la contrainte $\overline{R}_1 = \sum_{c=1}^{C} \log_2 \left( 1 + \frac{P_{1,c} \left| H_{1,c} \right|^2}{\sigma_{1,c}^2 + \alpha + \beta \sqrt{F_{1,c}}} \right)$

dans lesquelles $P_{1,c}$, $|H_{1,c}|^2$, $\sigma_{1,c}^2$ sont les mesures des caractéristiques de transmission d'une fréquence porteuse $F_{1,c}$ réalisées au cours de l'étape 1, et $P^*$ désigne le niveau minimal de puissance totale émise.

On peut noter que le nombre de fréquences porteuses choisies dans la sous-bande complémentaire est déterminé empiriquement afin que toutes les données portées par des fréquences porteuses $F_{1,m}$ soient réparties sur les fréquences porteuses $F_{1,p}$ et $F_{1,c}$.

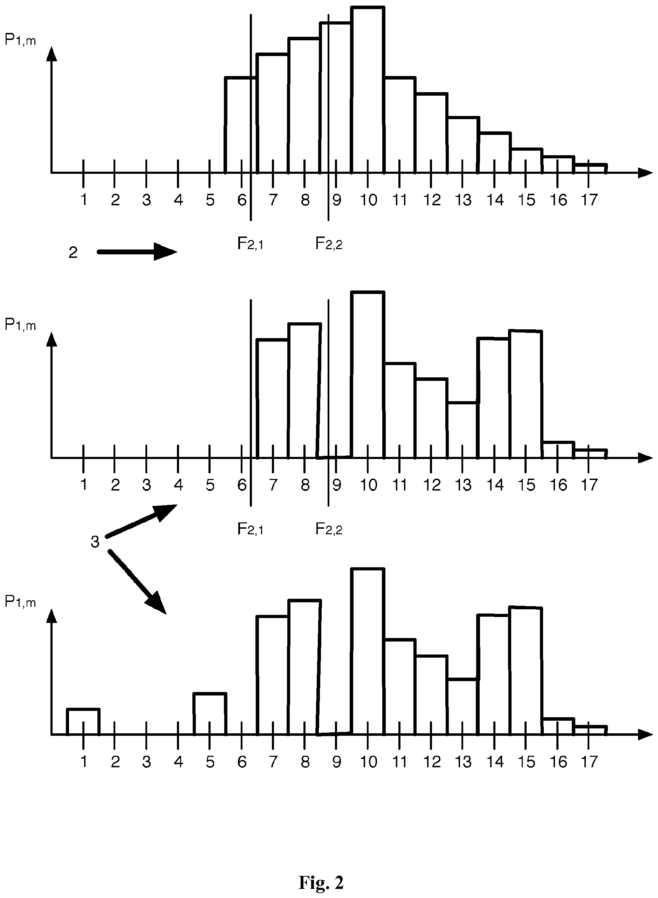

La Fig. 2 représente une illustration de ce premier mode de réalisation du procédé.

Le chronogramme du haut de la Fig. 2 représente un exemple de répartition des données du signal Se sur des fréquences porteuses $F_{1,m}$ numérotées 6 à 17 d'une sous-bande de la bande de fréquences réservée BF s'étendant de la fréquence 1 à la fréquence 17.

Admettons qu'à l'issue de l'étape 2, le modem maître ait détecté deux fréquences porteuses $F_{2,1}$ et $F_{2,2}$ allouées ou susceptibles de l'être pour coder le signal S qui sont communes aux fréquences porteuses 6 et 9 allouées pour coder le signal Se. De plus, admettons que les caractéristiques de transmission mesurées de ces fréquences porteuses 6 et 9 soient dégradées par rapport à celles d'une précédente mesure.

Le chronogramme du milieu de la Fig. 2 montre le résultat de l'optimisation selon l'équation (1) dans le cas où les fréquences porteuses 6 et 9 ont été remplacées par les fréquences porteuses 14 et 15 de la sous-bande définie ici entre les fréquences 6 et 17. On peut noter ici que les fréquences 14 et 15 étaient déjà allouées pour le codage du signal Se. Les données qu'elles portent font donc partie des données à répartir.

On constate sur cet exemple, que les données du signal Se jusque-là portées sur les fréquences porteuses 6 et 9 (auxquelles s'ajoutent les données portées par les fréquences 14 et 15) sont réparties sur les nouvelles fréquences porteuses 14 et 15.

Admettons maintenant que l'ensemble des données portées jusque là par les fréquences porteuses 6 et 9 (auxquelles s'ajoutent les données portées par les fréquences 14 et 15) n'ait pu être réparti sur les fréquences porteuses 14 et 15.

Deux autres fréquences 1 et 3 sont alors choisies dans une sous-bande complémentaire définie ici entre les fréquences 1 à 5.

Le chronogramme du bas montre le résultat de l'optimisation selon l'équation (2). On constate que les données qui n'avaient pas encore été réparties sur les fréquences 14 et 15 sont réparties sur ces deux fréquences porteuses 1 et 3.

Selon le second mode de réalisation de l'étape 3, le réseau R est un réseau électrique et le signal S est un signal de type courant porteur qui est transmis sur ce réseau R entre des modems. L'étape 3 est mise en oeuvre par un équipement qui est accessible par chacun de ces modems maîtres.

Selon ce mode de réalisation de l'étape 3, la répartition des données du signal Se sur les fréquences porteuses $F_{1,m}$ est optimisée de manière à minimiser le niveau de puissance d'émission des fréquences porteuses $F_{1,m}$ qui sont communes avec les fréquences porteuses $F_{2,n}$ ainsi détectées tout en optimisant le débit de transmission des données du signal Se. Mais cette optimisation est réalisée de manière concurrentielle avec l'optimisation de la répartition des données du signal S sur les fréquences porteuses $F_{2,n}$ allouées et ce sous la contrainte d'un profil de densité spectrale spécifique $\overline{P}$.

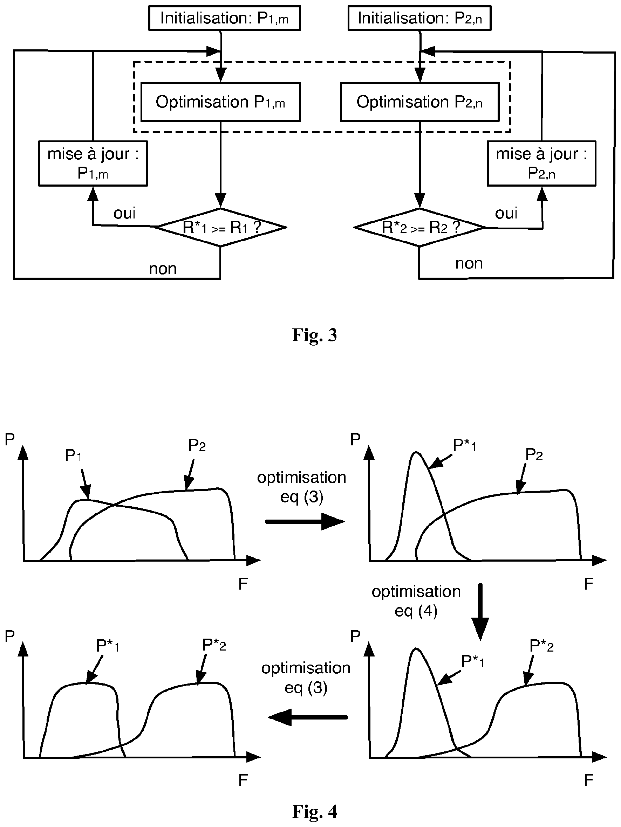

La Fig. 3 représente un diagramme d'un algorithme itératif qui permet une telle optimisation concurrentielle des répartitions des données des signaux Se et S sur leurs fréquences porteuses.

Cet algorithme est basé sur celui décrit par l'article «An Adaptative Multiuser Power Control Algorithm for VDSL », W. Yu et al, GLOBECOM01, vol. 1, 2001, p. 394-398, dans lequel le couplage entre le réseau électrique Re, par exemple de type G.hn mode courant porteur, et le réseau électrique R, par exemple de type G.hn mode courant porteur, est modélisé par l'expression $\alpha + \beta\sqrt{F_{1,m}}$. Le couple de paramètres $(\alpha,\beta)$ est estimé par minimisation par moindre des mesures des caractéristiques de transmission de chaque fréquence porteuse F réalisées au cours de l'étape 1.

Le principe de l'algorithme consiste à obtenir des répartitions des données des signaux Se et S de manière à atteindre les débits de transmission mesurés $R_1$ et $R_2$.

Pour cela, initialement, les niveaux de puissance d'émission $P_{1,m}$ et $P_{2,n}$ sont fixés à des valeurs prédéterminées. Ensuite, au cours d'une première étape itérative, communément appelée iterative water-filling en anglais, les niveaux de puissance d'émission $P_{1,m}$ sont minimisés sous la contrainte que le débit de transmission mesuré $R_1$ soit atteint, c'est-à-dire par résolution de l'équation (3) dans laquelle les exposants * indiquent que ce sont des valeurs atteintes par l'optimisation:

$$P_1^* = \min_{P_{1,m}}\left(\sum_{m=1}^{M} P_{1,m}\right) \qquad (3)$$

$$R_1^* = \sum_{m=1}^{M} \log_2 \left( 1 + \frac{P_{1,m} \left| H_{1,m} \right|^2}{\sigma_{1,m}^2 + \alpha + \beta \sqrt{F_{1,m}}} \right)$$

sous la contrainte

dans laquelle $P_{1,m}$, $|H_{1,m}|^2$, $\sigma_{1,m}^2$ sont les mesures des caractéristiques de transmission d'une fréquence porteuse $F_{1,m}$ réalisées au cours de l'étape 1.

Suite à l'optimisation de l'équation (3), les niveaux de puissance d'émission $P_{2,n}$ sont minimisés sous la contrainte que le débit de transmission mesuré $R_2$ soit atteint, c'est-à-dire par résolution de l'équation (4) dans laquelle les exposants * indiquent que ce sont des valeurs atteintes par l'optimisation:

$$P_2^* = \min_{P_{2,n}} \left( \sum_{n=1}^{N} P_{2,n} \right) \qquad (4)$$

$$R_2^* = \sum_{n=1}^{N} \log_2 \left( 1 + \frac{P_{2,n} \left| H_{2,n} \right|^2}{\sigma_{2,n}^2 + \alpha + \beta \sqrt{F_{2,n}}} \right)$$

sous la contrainte

dans lesquelles les caractéristiques de transmission sont mesurées par chaque modem esclave du réseau R, à savoir le niveau de densité spectrale $P_{2,n}$ de cette fréquence porteuse, le gain $|H_{2,n}|^2$ et la variance $\sigma_{2,n}^2$ du canal complexe de transmission relatif à cette fréquence porteuse et le débit de transmission $\overline{R}_2$ du signal S.

Une fois l'optimisation de l'équation (4) réalisée, l'optimisation de l'équation (3) est à nouveau réalisée, puis celle de l'équation (4) et ainsi de suite tant que le débit de transmission $R_1^*$ est estimé comme étant suffisamment proche (inférieur ou supérieur ou égal) du débit de transmission mesuré $R_1$ et que le débit de transmission $R_2^*$ est estimé comme étant suffisamment proche du débit de transmission mesuré $R_2$.

Lorsque ces deux conditions sont vérifiées, la première étape est suivie d'une seconde étape au cours de laquelle les niveaux de puissance d'émission $P_{1,m}$ et $P_{2,n}$ sont mis à jour selon les relations suivantes :

$$\begin{cases} si & R_1^* > R_1 + \varepsilon & alors & P_1^* = P_1^* - \delta \\ si & R_1^* < R_1 & alors & P_1^* = P_1^* + \delta \\ si & P_1^* > \overline{P}_1 & alors & P_1^* = \overline{P} \\ si & R_2^* > R_2 + \varepsilon & alors & P_2^* = P_2^* - \delta \\ si & R_2^* < R_2 & alors & P_2^* = P_2^* + \delta \\ si & P_2^* > \overline{P}_2 & alors & P_2^* = \overline{P} \end{cases}$$

La seconde étape est suivie de la première étape tant que le débit de transmission $R_1^*$ est supérieur au débit de transmission mesuré $R_1$ ou que le débit de transmission $R_2^*$ est supérieur au débit de transmission mesuré $R_2$.

Les paramètres $\delta$ et $\varepsilon$ sont fixés empiriquement, par exemple à des valeurs respectives de 3 dB et de 10%.

La Fig. 4 représente une illustration de deux itérations de cet algorithme pour répartir les données des signaux Se et S de manière concurrentielle.

Chaque chronogramme représente les densités spectrales de puissance d'émission des signaux Se et S en fonction des fréquences porteuses de la bande de fréquence réservée BF. Le chronogramme en haut à gauche représente ces densités $P_1$ et $P_2$ suite à l'initialisation des niveaux de puissance d'émission $P_{1,m}$ et $P_{2,n}$. Le chronogramme en haut à droite représente ces densités une fois que les niveaux de puissance d'émission $P_{1,m}$ ont été optimisés selon l'équation (3). On constate que la densité spectrale $P_1^*$ obtenue se concentre sur des fréquences porteuses qui ne sont pas allouées pour coder le signal S où tout au moins sur des fréquences porteuses dont les niveaux de puissance d'émission $P_{2,n}$ sont les plus faibles. Le chronogramme en bas à droite représente ces densités une fois que les niveaux de puissance d'émission $P_{2,n}$ ont été optimisés selon l'équation (4). On constate le même phénomène à savoir que la densité spectrale $P_2^*$ obtenue se concentre sur des fréquences porteuses qui ne sont pas allouées pour coder le signal Se où tout au moins vers des fréquences porteuses dont les niveaux de puissance d'émission $P_{1,m}$ sont les plus faibles.

Ainsi, à chaque itération de la première étape de l'algorithme, les densités spectrales de puissance d'émission se distinguent l'une de l'autre évitant ainsi des interférences entre les signaux Se et S.

Le chronogramme en bas à gauche représente les densités spectrales de puissance d'émission une fois que les niveaux de puissance d'émission $P_{1,m}$ ont été à nouveau optimisés selon l'équation (3) au cours d'une seconde itération de la première étape de l'algorithme. On constate que la densité spectrale de puissance d'émission $P_1^*$ s'étale sur un plus grand nombre de fréquences porteuses du fait que des niveaux de puissance d'émission $P_{2,n}$ dont les fréquences porteuses $F_{1,m}$ sont proches des fréquences porteuses $F_{2,n}$ sont de valeurs moins élevées qu'à l'itération précédente.

Ainsi, au bout de quelques itérations de l'algorithme, les densités spectrales de puissance se distinguent l'une de l'autre et s'étalent sur toute la bande de fréquence réservée.

Selon une caractéristique de l'invention, les étapes du procédé sont répétées périodiquement.

De préférence, la période de répétition T est synchronisée sur la fréquence du courant électrique alternatif délivré par un réseau électrique Re ou R. Par exemple, lorsqu'un cycle de fonctionnement, mode MAC, des modems $M_{CPL}$ est synchronisé sur la fréquence F, la période T débute après une durée Δ qui débute à partir de chaque passage à 0 du signal électrique Se.

Dans ce cas, le modem $M_{CPL}$ est prévu pour détecter le passage à 0 du signal électrique Se qui lui permet alors de lancer l'exécution des étapes du procédé après la durée Δ qui peut être également nulle.

Selon l'un de ses aspects matériels, la présente invention concerne un dispositif de réduction des interférences entre un premier signal de type courant porteur transmis entre modems d'un réseau électrique et un second signal transmis entre modems d'un autre réseau.

Ce dispositif comporte des moyens pour mettre en oeuvre un procédé de réduction des interférences décrit ci-dessus.

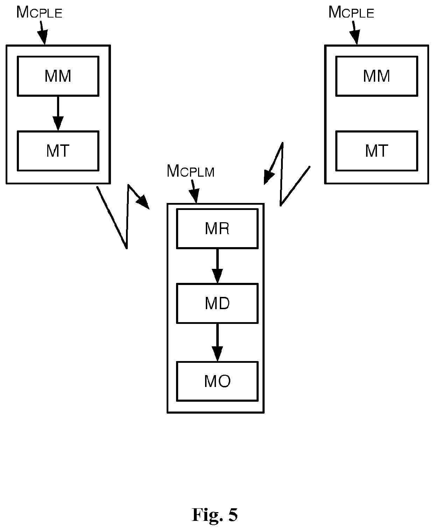

La Fig. 5 représente un mode de réalisation de ce dispositif dans le cas d'un réseau électrique comprenant au moins un modem esclave et un modem maître $M_{CPLM}$.

Selon ce mode, le dispositif est partiellement mis en oeuvre par un modem maître et par chaque modem esclave $M_{CPLE}$.

Chaque modem esclave $M_{CPLE}$ est un modem courant porteur classique c'est-à-dire qu'il est prévu pour transmettre à un autre modem le signal Se dont les données sont réparties sur des fréquences porteuses. De plus, chaque modem esclave $M_{CPLE}$ comporte des moyens MM pour mesurer des caractéristiques de transmission de chaque fréquence porteuse allouée pour le codage du signal Se ou susceptible de l'être. Selon la présente invention, le modem esclave $M_{CPLE}$ comporte des moyens MT pour transmettre au modem maître $M_{CPLM}$ les caractéristiques de transmission mesurées.

Le modem maître $M_{CPLM}$ est prévu pour gérer la répartition des fréquences porteuses. Selon la présente invention, il comporte des moyens MR pour recevoir des caractéristiques de transmission de chaque fréquence porteuse susceptible d'être utilisée, mesurées par chaque modem esclave $M_{CPLE}$, des moyens MD pour détecter, par analyse desdites caractéristiques de transmission mesurées, au moins une fréquence porteuse $F_{2,n}$ qui est allouée ou susceptible de l'être pour coder un second signal S transmis entre modems d'un autre réseau R, et qui est commune avec au moins une fréquence porteuse $F_{1,m}$ qui est allouée pour le codage du signal Se et dont les caractéristiques de transmission mesurées sont dégradées par rapport à celles d'une précédente mesure. Le modem maître $M_{CPLM}$ comporte également des moyens MO pour optimiser la répartition des données du signal Se sur des fréquences porteuses de manière à minimiser le niveau de puissance d'émission des premières fréquences porteuses $F_{1,m}$ qui sont communes avec les fréquences porteuses $F_{2,n}$ ainsi détectées tout en optimisant le débit de transmission du premier signal Se.

Selon un mode de réalisation mis en oeuvre, les moyens MM, MD, MO sont réalisés par un ensemble de composants électroniques programmables utilisant en particulier une mémoire et les moyens MT sont des composants électroniques qui communiquent avec des moyens de communication classiques de données entre modems d'un réseau électrique.

**Revendications**

1. Procédé de réduction des interférences entre un premier signal de type courant porteur (Se) transmis entre modems ($M_{CPL}$) d'un réseau électrique (Re) et un second signal (S) transmis entre modems (M) d'un autre réseau (R), lesdits signaux (Se, S) étant codés par répartition des données sur des fréquences porteuses allouées d'une même bande de fréquence réservée (BF), le procédé comportant

   - une étape (1) de mesure par chaque modem ($M_{CPL}$) du réseau électrique de caractéristiques de transmission de chaque fréquence porteuse (F) susceptible d'être utilisée pour le codage du premier signal (Se) et
   - une étape (3) d'optimisation de la répartition des données du premier signal (Se) sur des fréquences porteuses de manière à minimiser le niveau de puissance d'émission de fréquences porteuses sous la contrainte d'un débit de transmission du premier signal (Se), **caractérisé en ce qu'**il comporte
   - une étape (2) de détection, par analyse des caractéristiques de transmission mesurées, d'au moins une fréquence porteuse ($F_{2,n}$), dite seconde fréquence porteuse, qui est allouée pour coder le second signal (S) et qui est commune avec au moins une fréquence porteuse ($F_{1,m}$), dite première fréquence porteuse, qui est allouée pour le codage du premier signal (Se), et dont les caractéristiques de transmission mesurées sont dégradées par rapport à celles d'une précédente mesure, et
   - l'optimisation de la répartition des données du premier signal (Se) sous contrainte d'un débit de transmission du premier signal (Se) est réalisée de manière à minimiser le niveau de puissance d'émission des premières fréquences porteuses ($F_{1,m}$) qui sont communes avec les secondes fréquences porteuses ($F_{2,n}$) ainsi détectées.

2. Procédé selon la revendication 1, dans lequel les caractéristiques de transmission mesurées sur une fréquence porteuse (F) sont le niveau de densité spectrale (P) de cette fréquence porteuse, le gain ($|H|^2$) et la variance ($\sigma^2$) du canal complexe de transmission relatif à cette fréquence porteuse et le débit de transmission ($R_1$) du premier signal (Se).

3. Procédé selon la revendication 1 ou 2, dans lequel une première fréquence porteuse ($F_{1,m}$) est commune à une seconde fréquence porteuse ($F_{2,n}$) lorsqu'elles sont séparées l'une de l'autre d'une distance inférieure à une distance maximale prédéterminée (D).

4. Procédé selon la revendication 3, dans lequel la distance maximale (D) est soit nulle, soit strictement supérieure à zéro, soit supérieure ou égale à zéro.

5. Procédé selon l'une des revendications 1 à 4, dans lequel au cours de l'étape d'optimisation (3), chaque première fréquence porteuse ($F_{1,m}$), dont les caractéristiques de transmission mesurées sont dégradées par rapport à celles d'une précédente mesure et qui est commune avec une seconde fréquence porteuse ($F_{2,n}$), est remplacée par une nouvelle fréquence porteuse ($F_{1,p}$) de la bande de fréquence réservée BF, et les données du premier signal (Se), qui étaient jusque là codées sur lesdites premières fréquences porteuses sont alors réparties sur ces nouvelles fréquences porteuses ($F_{1,p}$) de manière à ce que le débit de transmission ($R^*$) de ces nouvelles fréquences porteuses soit maximisé sous la contrainte que la valeur maximale de puissance d'émission de chaque nouvelle fréquence porteuse ($F_{1,p}$) respecte un profil de densité spectrale spécifique ($\overline{P}_1$).

6. Procédé selon la revendication 5, dans lequel chaque nouvelle fréquence porteuse ($F_{1,p}$) est choisie dans une sous-bande de la bande de fréquence réservée dans laquelle aucune fréquence porteuse n'est allouée pour coder le second signal (S).

7. Procédé selon la revendication 6, dans lequel si le débit de transmission du premier signal (Se) obtenu à l'issu de l'étape d'optimisation est inférieur à un débit de transmission mesuré de ce signal, au moins une autre fréquence porteuse ($F_{1,c}$) est sélectionnée dans la sous-bande complémentaire de ladite sous-bande.

8. Procédé selon la revendication 7, dans lequel les fréquences porteuses sont choisies dans la sous-bande complémentaire de manière à ce qu'une distance minimale les sépare.

9. Procédé selon la revendication 8, dans lequel les données du premier signal (Se) qui n'ont pu être codées sur lesdites nouvelles fréquences porteuses ($F_{1,p}$) sont alors réparties sur ces fréquences porteuses ($F_{1,c}$) de la sous-bande complémentaire de manière à minimiser le niveau de puissance d'émission ($P_{1,c}$) de chaque fréquence porteuse ($F_{1,c}$) de la sous-bande complémentaire sous la contrainte qu'un débit de transmission mesuré du premier signal (Se) soit atteint.

**10.** Procédé selon l'une des revendications 1 à 4, dans lequel au cours de l'étape d'optimisation, la répartition des données du premier signal (Se) sur les premières fréquences porteuses ($F_{1,m}$) est optimisée de manière à minimiser le niveau de puissance d'émission des premières fréquences porteuses ($F_{1,m}$) qui sont communes avec les secondes fréquences porteuses ($F_{2,n}$) ainsi détectées tout en optimisant le débit de transmission des données du premier signal (Se), et, de manière concurrentielle, la répartition des données du second signal (S) sur lesdites secondes fréquences porteuses ($F_{2,n}$) est optimisée de manière à minimiser le niveau de puissance d'émission desdites secondes fréquences porteuses ($F_{2,n}$) tout en optimisant le débit de transmission des données du second signal (S), et ce sous la contrainte d'un profil de densité spectrale spécifique ($\overline{P}$).

**11.** Procédé selon l'une des revendications précédentes, dans lequel les étapes de mesure, de détection et d'optimisation sont repérées périodiquement.

**12.** Procédé selon la revendication 11, dans lequel la répétition desdites étapes est synchronisée sur la fréquence du courant électrique d'un réseau électrique.

**13.** Dispositif de réduction des interférences entre un premier signal de type courant porteur (Se) transmis entre modems ($M_{CPLE}$) d'un réseau électrique (Re) et un second signal (S) transmis entre modems (M) d'un autre réseau (R), lesdits signaux (Se, S) étant codés par répartition des données sur des fréquences porteuses allouées d'une même bande de fréquence réservée, ledit dispositif comportant

- des moyens (MM) pour que chaque modem ($M_{CPL}$) du réseau électrique mesure des caractéristiques de transmission de chaque fréquence porteuse ($F$) allouée pour le codage du premier signal (Se) ou susceptible de l'être, et
- des moyens (MO) pour optimiser la répartition des données du premier signal (Se) sur des fréquences porteuses de manière à minimiser le niveau de puissance d'émission de fréquences porteuses sous la contrainte d'un débit de transmission du premier signal (Se),

**caractérisé en ce qu'**il comporte également

- des moyens (MD) pour détecter, par analyse des caractéristiques de transmission mesurées, au moins une fréquence porteuse ($F_{2,n}$), dite seconde fréquence porteuse, qui est allouée pour coder le second signal (S) et qui est commune avec au moins une fréquence porteuse ($F_{1,m}$), dite première fréquence porteuse, qui est allouée pour le codage du premier signal (Se) et dont les caractéristiques de transmission mesurées sont dégradées par rapport à celles d'une précédente mesure, et **en ce que**
- les moyens (MO) pour optimiser la répartition des données du premier signal (Se) sous contrainte d'un débit de transmission du premier signal (Se) sont prévus pour minimiser le niveau de puissance d'émission des premières fréquences porteuses ($F_{1,m}$) qui sont communes avec les secondes fréquences porteuses ($F_{2,n}$) ainsi détectées.

**14.** Modem, dit maître, prévu pour gérer la répartition de fréquences porteuses, dites premières, d'un premier signal de type courant porteur (Se) transmis sur un réseau électrique, ledit modem comportant

- des moyens (MR) pour recevoir des caractéristiques de transmission de chaque fréquence porteuse susceptible d'être utilisée mesurées par chaque autre modem du réseau électrique, et
- des moyens (MO) pour optimiser la répartition des données du premier signal (Se) sur des fréquences porteuses de manière à minimiser le niveau de puissance d'émission de fréquences porteuses sous la contrainte d'un débit de transmission du premier signal (Se),

**caractérisé en ce qu'**il comporte également

- des moyens (MD) pour détecter, par analyse desdites caractéristiques de transmission mesurées, au moins une fréquence porteuse ($F_{2,n}$), dite seconde fréquence porteuse, qui est allouée pour coder un second signal (S) transmis entre modems d'un autre réseau, et qui est commune avec au moins une fréquence porteuse ($F_{1,m}$), dite première fréquence porteuse, qui est allouée pour le codage du premier signal (Se), et dont les caractéristiques de transmission mesurées sont dégradées par rapport à celles d'une précédente mesure, et **en ce que**

- les moyens (MO) pour optimiser la répartition des données du premier signal (Se) sous contrainte d'un débit de transmission du premier signal (Se) sont prévus pour minimiser le niveau de puissance d'émission des premières fréquences porteuses ($F_{1,m}$) qui sont communes avec les secondes fréquences porteuses ($F_{2,n}$) ainsi détectées.

15. Système pour transmettre un signal de type courant porteur entre modems d'un réseau électrique, **caractérisé en ce qu'**au moins un modem est conforme à la revendication 14.

**Patentansprüche**

1. Verfahren zur Interferenzminderung zwischen einem ersten Signal vom Typ Trägerstrom (Se), das zwischen Modems ($M_{CPL}$) eines Stromnetzes (Re) übertragen wird, und einem zweiten Signal (S), das zwischen Modems (M) eines anderen Netzes (R) übertragen wird, wobei die Signale (Se, S) durch Verteilung der Daten auf Trägerfrequenzen, die einem selben reservierten Frequenzband (BF) zugeordnet sind, codiert sind, wobei das Verfahren Folgendes umfasst

   - einen Schritt (1) des Messens durch jedes Modem ($M_{CPL}$) des Stromnetzes von Übertragungsmerkmalen jeder Trägerfrequenz (F), die für das Codieren des ersten Signals (Se) in Frage kommt, und
   - einen Schritt (3) der Optimierung der Verteilung der Daten des ersten Signals (Se) auf Trägerfrequenzen derart, dass der Sendeleistungspegel von Trägerfrequenzen unter der Auflage eines Übertragungspegels des ersten Signals (Se) minimiert wird, **dadurch gekennzeichnet, dass** er
   - einen Schritt (2) des Erfassens durch Analyse der gemessenen Übertragungsmerkmale mindestens einer Trägerfrequenz ($F_{2,n}$), zweite Trägerfrequenz genannt, die zugeordnet ist, um das zweite Signal (S) zu codieren und die mit mindestens einer Trägerfrequenz ($F_{1,m}$), erste Trägerfrequenz genannt, die für das Codieren des ersten Signals (Se) zugeordnet ist, und deren gemessene Übertragungsmerkmale in Bezug auf die einer vorhergehenden Messung verschlechtert sind, gemeinsam ist, zu codieren, und
   - die Optimierung der Verteilung der Daten des ersten Signals (Se) unter Auflage eines Übertragungspegels des ersten Signals (Se) derart ausgeführt wird, dass der Sendeleistungspegel der ersten Trägerfrequenzen ($F_{1,m}$), die mit den zweiten Trägerfrequenzen ($F_{2,n}$) gemeinsam sind, die derart erfasst werden, minimiert wird.

2. Verfahren nach Anspruch 1, wobei die Übertragungsmerkmale, die auf einer Trägerfrequenz (F) gemessen werden, das Spektraldichteniveau (P) dieser Trägerfrequenz, die Verstärkung ($|H|^2$) und die Varianz $\sigma^2$ des komplexen Übertragungskanals in Bezug auf diese Trägerfrequenz und den Übertragungsdurchsatz ($R_1$) des ersten Signals (Se) sind.

3. Verfahren nach Anspruch 1 oder 2, wobei eine erste Trägerfrequenz ($F_{1,m}$) mit einer zweiten Trägerfrequenz ($F_{2,n}$) gemeinsam ist, wenn sie voneinander um einen Abstand getrennt sind, der kleiner ist als ein vorbestimmter maximaler Abstand (D).

4. Verfahren nach Anspruch 3, wobei der maximale Abstand (D) entweder gleich null ist oder strikt größer als null, oder größer oder gleich null.

5. Verfahren nach einem der Ansprüche 1 bis 4, wobei im Laufe des Optimierungsschritts (3) jede erste Trägerfrequenz ($F_{1,m}$), deren gemessene Übertragungsmerkmale in Vergleich zu denen einer vorhergehenden Messung verschlechtert sind, und die mit einer zweiten Trägerfrequenz ($F_{2,n}$) gemeinsam ist, durch eine neue Trägerfrequenz ($F_{1,p}$) des reservierten Frequenzbands BF ersetzt wird, und die Daten des ersten Signals (Se), die bisher auf den ersten Trägerfrequenzen codiert waren, werden auf diesen neuen Trägerfrequenzen ($F_{1,p}$) derart verteilt, dass der Übertragungsdurchsatz (R*) dieser neuen Trägerfrequenzen unter der Auflage maximiert wird, dass der maximale Sendeleistungswert jeder neuen Trägerfrequenz ($F_{1,p}$) ein spezifisches Spektraldichteprofil ($\overline{P}_1$) einhält.

6. Verfahren nach Anspruch 5, wobei jede neue Trägerfrequenz ($F_{1,p}$) aus einem Unterband des reservierten Frequenzbands, in dem keine Trägerfrequenz zum Codieren des zweiten Signals (S) zugeordnet ist, ausgewählt wird.

7. Verfahren nach Anspruch 6, bei dem, falls der Übertragungsdurchsatz des ersten Signals (Se), der nach dem Optimierungsschritt erhalten wird, kleiner ist als ein gemessener Übertragungsdurchsatz dieses Signals, mindestens eine andere Trägerfrequenz ($F_{1,r}$) aus dem komplementären Unterband des Unterbands ausgewählt wird.

8. Verfahren nach Anspruch 7, wobei die Trägerfrequenzen in dem komplementären Unterband derart ausgewählt werden, dass sie von einem minimalen Abstand getrennt sind.

9. Verfahren nach Anspruch 8, bei dem die Daten des ersten Signals (Se), die auf den neuen Trägerfrequenzen ($F_{1,p}$) nicht codiert werden konnten, auf diese Trägerfrequenzen ($F_{1,r}$) des komplementären Unterbands derart verteilt werden, dass der Sendeleistungspegel ($P_{1,r}$) jeder Trägerfrequenz ($F_{1,r}$) des komplementären Unterbands unter der Auflage minimiert wird, dass ein gemessener Übertragungsdurchsatz des ersten Signals (Se) erreicht wird.

10. Verfahren nach einem der Ansprüche 1 bis 4, wobei im Laufe des Optimierungsschritts die Verteilung der Daten des ersten Signals (Se) auf die ersten Trägerfrequenzen ($F_{1,m}$) derart optimiert wird, dass der Sendeleistungspegel der ersten Trägerfrequenzen ($F_{1,m}$), die mit den zweiten Trägerfrequenzen ($F_{2,n}$) gemeinsam sind, die derart erfasst werden, minimiert wird, während gleichzeitig der Übertragungsdurchsatz der Daten des ersten Signals (Se) optimiert wird, und konkurrenziell die Verteilung der Daten des zweiten Signals (S) auf die zweiten Trägerfrequenzen ($F_{2,n}$) derart optimiert wird, dass der Sendeleistungspegel der zweiten Trägerfrequenzen ($F_{2,n}$) minimiert wird, während gleichzeitig der Übertragungsdurchsatz der Daten des zweiten Signals (S) optimiert wird, und dies unter der Auflage eines spezifischen Spektraldichteprofils ($\bar{P}$) .

11. Verfahren nach einem der vorhergehenden Ansprüche, bei dem die Schritte des Messens, der Erfassung und der Optimierung periodisch markiert sind.

12. Verfahren nach Anspruch 11, wobei die Wiederholung der Schritte auf der Frequenz des Stromnetzes eines Stromnetzes synchronisiert ist.

13. Vorrichtung zur Interferenzminderung zwischen einem ersten Signal vom Typ Trägerstrom (Se), das zwischen Modems ($M_{CPLE}$) eines Stromnetzes (Re) übertragen wird, und einem zweiten Signal (S), das zwischen Modems (M) eines anderen Netzes (R) übertragen wird, wobei die Signale (Se, S) durch Verteilung der Daten auf Trägerfrequenzen, die einem selben reservierten Frequenzband zugeordnet sind, codiert werden, wobei die Vorrichtung Folgendes umfasst:

- Mittel (MM), damit jedes Modem ($M_{CPL}$) des Stromnetzes Übertragungsmerkmale jeder Trägerfrequenz (F), die für das Codieren des ersten Signals (Se) zugeordnet ist oder zugeordnet sein könnte, misst, und
- Mittel (MO) zum Optimieren der Verteilung der Daten des ersten Signals (Se) auf Trägerfrequenzen derart, dass der Sendeleistungspegel von Trägerfrequenzen unter der Auflage eines Übertragungdurchsatzes des ersten Signals (Se) minimiert wird,

**dadurch gekennzeichnet, dass** es auch Folgendes umfasst

- Mittel (MD), um durch Analyse der gemessenen Übertragungsmerkmale mindestens eine Trägerfrequenz ($F_{2,n}$), zweite Trägerfrequenz genannt, die zum Codieren des zweiten Signals (S) zugeordnet ist, und mit mindestens einer Trägerfrequenz ($F_{1,m}$), erste Trägerfrequenz genannt, die für das Codieren des ersten Signals (Se) zugeordnet ist, und deren gemessene Übertragungsmerkmale im Vergleich zu denen einer vorhergehenden Messung verschlechtert sind, gemeinsam ist, zu erfassen, und dass
- die Mittel (MO) zum Optimieren der Verteilung der Daten des ersten Signals (Se) unter der Auflage eines Übertragungdurchsatzes des ersten Signals (Se) vorgesehen sind, um den Sendeleistungspegel der ersten Trägerfrequenzen ($F_{1,m}$), die mit den zweiten Trägerfrequenzen ($F_{2,n}$) gemeinsam sind, die so erfasst werden, zu minimieren.

14. Modem, Master genannt, das vorgesehen ist, um die Verteilung von Trägerfrequenzen, erste Trägerfrequenzen genannt, eines ersten Signals vom Typ Trägerstrom (Se), das auf einem Stromnetz übertragen wird, zu verwalten, wobei das Modem Folgendes umfasst

- Mittel (MR) zum Empfangen der Übertragungsmerkmale jeder Trägerfrequenz, die verwendet werden kann, die von jedem anderen Modem des Stromnetzes gemessen werden, und
- Mittel (MO) zum Optimieren der Verteilung der Daten des ersten Signals (Se) auf Trägerfrequenzen derart, dass der Sendeleistungspegel von Trägerfrequenzen unter der Auflage eines Übertragungdurchsatzes des ersten Signals (Se) minimiert wird,

**dadurch gekennzeichnet, dass** es auch Folgendes umfasst

- Mittel (MD), um durch Analyse der gemessenen Übertragungsmerkmale mindestens eine Trägerfrequenz ($F_{2,n}$), zweite Trägerfrequenz genannt, die zum Codieren eines zweiten Signals (S) zugeordnet ist, das zwischen Modems eines anderen Netzes übertragen wird, zu erfassen, und die mit mindestens einer Trägerfrequenz ($F_{1,m}$), erste Trägerfrequenz genannt, die für das Codieren des ersten Signals (Se) zugeordnet ist, und deren gemessene Übertragungsmerkmale im Vergleich zu denen einer vorhergehenden Messung verschlechtert sind, gemeinsam ist, und dass
- die Mittel (MO) zur Optimierung der Verteilung der Daten des ersten Signals (Se) unter Auflage eines Übertragungdurchsatzes des ersten Signals (Se) vorgesehen sind, um den Sendeleistungspegel der ersten Trägerfrequenzen ($F_{1,m}$), die mit den zweiten Trägerfrequenzen ($F_{2,n}$), die derart erfasst werden, gemeinsam sind, zu minimieren.

15. System zum Übertragen eines Signals vom Typ Trägerstrom zwischen Modems eines Stromnetzes, **dadurch gekennzeichnet, dass** mindestens ein Modem Anspruch 14 entspricht.


**Claims**

1. Method of reducing interference between a first signal of the carrier current type (Se) transmitted between modems ($M_{CPL}$) in an electrical network (Re) and a second signal (S) transmitted between modems (M) in another network (R), the said signals (Se, S) being coded by the distribution of data over allocated carrier frequencies in the same reserved frequency band (BF), the method comprising

- a step (1) of measurement, by each modem ($M_{CPL}$) in the electrical network, of transmission characteristics of each carrier frequency (F) that may be used for coding the first signal (Se), and
- a step (3) of optimisation of the distribution of the data of the first signal (Se) on carrier frequencies so as to minimise the transmission power level of carrier frequencies subject to the constraint of a transmission rate of the first signal (Se), **characterised in that** it comprises
- a step (2) of detection, by analysing the measured transmission characteristics, of at least one carrier frequency ($F_{2,n}$), referred to as the second carrier frequency, that is allocated for coding the second signal (S) and is common with at least one carrier frequency ($F_{1,m}$), referred to as the first carrier frequency, that is allocated for coding the first signal (Se), and the measured transmission characteristics of which are degraded with respect to those of a previous measurement, and
- optimisation of the distribution of the data of the first signal (Se) subject to the constraint of a transmission rate of the first signal (Se) is carried out so as to minimise the transmission power level of the first carrier frequencies ($F_{1,m}$ that are common with the second carrier frequencies ($F_{2,n}$) thus detected.

2. Method according to claim 1, in which the transmission characteristics measured on a carrier frequency (F) are the spectral density level (P) of this carrier frequency, the gain ($|H|^2$) and the variance ($\sigma^2$) of the complex transmission channel relating to this carrier frequency and the transmission rate ($R_1$) of the first signal (Se).

3. Method according to claim 1 or 2, in which a first carrier frequency ($F_{1,m}$) is common to a second carrier frequency ($F_{2,n}$ when they are separated from each other by a distance less than a predetermined maximum distance (D).

4. Method according to claim 3, in which the maximum distance (D) is either zero, strictly greater than zero, or greater than or equal to zero.

5. Method according to one of claims 1 to 4, in which, during the optimisation step (3), each first carrier frequency ($F_{1,m}$), the measured transmission characteristics of which are degraded with respect to those of a previous measurement and which is common with a second carrier frequency ($F_{2,n}$), is replaced by a new carrier frequency ($F_{1,p}$) of the reserved frequency band BF, and the data of the first signal (Se), which were until then coded on said first carrier frequencies, are then distributed on these new carrier frequencies ($F_{1,p}$) so that the transmission rate ($R^*$) of these new carrier frequencies is maximised subject to the maximum transmission power of each new carrier frequency ($F_{1,p}$ complying with a specific spectral density profile ($\bar{P}_1$).

**6.** Method according to claim 5, in which each new carrier frequency ($F_{1,p}$) is chosen in a sub-band of the reserved frequency band in which no carrier frequency is allocated for coding the second signal (S).

**7.** Method according to claim 6, in which, if the transmission rate of the first signal (Se) obtained at the end of the optimisation step is less than a measured transmission rate of this signal, at least one other carrier frequency ($F_{1,c}$) is selected in the sub-band complementary to said sub-band.

**8.** Method according to claim 7, in which the carrier frequencies are chosen in the complementary sub-band so that a minimum distance separates them.

**9.** Method according to claim 8, in which the data of the first signal (Se) that have not been able to be coded on said new carrier frequencies ($F_{1,p}$) are then distributed over these carrier frequencies ($F_{1,c}$) of the complementary sub-band so as to minimise the transmission power level ($P_{1,c}$) of each carrier frequency ($F_{1,c}$) of the complementary sub-band subject to a measured transmission rate of the first signal (Se) being reached.

**10.** Method according one of claims 1 to 4, in which, during the optimisation step, the distribution of the data of the first signal (Se) over the first carrier frequencies ($F_{1,m}$ is optimised so as to minimise the transmission power level of the first carrier frequencies ($F_{1,m}$ that are common with the second carrier frequencies ($F_{2,n}$) thus detected while optimising the transmission rate of the data of the first signal (Se) and, competitively, the distribution of the data of the second signal (S) over the said second carrier frequencies ($F_{2,n}$) is optimised so as to minimise the transmission power level of the said second carrier frequencies ($F_{2,n}$) while optimising the transmission rate of the data of the second signal (S), and this subject to the constraint of a specific spectral density profile ($\overline{P}$).

**11.** Method according to one of the preceding claims, in which the measurement, detection and optimisation steps are repeated periodically.

**12.** Method according to claim 11, in which the repetition of the said steps is synchronised on the frequency of the electric current of an electrical network.

**13.** Device for reducing interference between a first signal of the carrier current type (Se) transmitted between modems ($M_{CPLE}$) in an electrical network (Re) and a second signal (S) transmitted between modems (M) in another network (R), the said signals (Se, S) being coded by distribution of the data on allocated carrier frequencies of the same reserved frequency band, the said device comprising

- means (MM) so that each modem ($M_{CPL}$) in the electrical network measures transmission characteristics of each carrier frequency ($F$) allocated for coding the first signal (Se) or that may be so allocated, and
- means (MO) for optimising the distribution of the data of the first signal (Se) over carrier frequencies so as to minimise the transmission power level of carrier frequencies subject to the constraint of a transmission rate of the first signal (Se), **characterised in that** it also comprises
- means (MD) for detecting, by analysing the measured transmission characteristics, at least one carrier frequency ($F_{2,n}$), referred to as the second carrier frequency, which is allocated for coding the second signal (S) and is common with at least one carrier frequency ($F_{1,m}$), referred to as the first carrier frequency, which is allocated for coding the first signal (Se) and the measured transmission characteristics of which are degraded with respect to the those of a previous measurement, and **in that**
- the means (MO) for optimising the distribution of the data of the first signal (Se) subject to the constraint of a transmission rate of the first signal (Se) are provided for minimising the transmission power level of the first carrier frequencies ($F_{1,m}$ that are common with the second carrier frequencies ($F_{2,n}$ thus detected.

**14.** Modem, referred to as the master modem, provided for managing the distribution of carrier frequencies, referred to as first carrier frequencies, of a first signal of the carrier current type (Se) transmitted over an electrical network, the said modem comprising

- means (MR) for receiving transmission characteristics of each carrier frequency that may used measured by each other modem in the electrical network, and
- means (MO) for optimising the distribution of the data of the first signal (Se) over carrier frequencies so as to minimise the transmission power level of carrier frequencies subject to the constraint of a transmission rate of the first signal (Se), **characterised in that** it also comprises

- means (MD) for detecting, by analysing the said measured transmission characteristics, at least one carrier frequency ($F_{2,n}$), referred to as the second carrier frequency, which is allocated for coding a second signal (S) transmitted between modems in another network, and is common with at least one carrier frequency ($F_{1,m}$), referred to as the first carrier frequency, which is allocated for coding the first signal (Se) and the measured transmission characteristics of which are degraded with respect to the those of a previous measurement, and **in that**

- the means (MO) for optimising the distribution of the data of the first signal (Se) subject to the constraint of a transmission rate of the first signal (Se) are provided for minimising the transmission power level of the first carrier frequencies ($F_{1,m}$ that are common with the second carrier frequencies ($F_{2,n}$ thus detected.

15. System for transmitting a signal of the carrier current type between modems in an electrical network, **characterised in that** at least one modem is in accordance with claim 14.

**Fig. 1**

**Fig. 2**

**Fig. 3**

**Fig. 4**

Mcple

MM

MT

Mcplm

MR

MD

MO

Mcple

MM

MT

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1830525 A2

**Littérature non-brevet citée dans la description**

- HomePlug AV baseline spécification. *HomePlug PowerLine Alliance,* Décembre 2005
- **K. SONG et al.** Dynamic Spectrum Management for Next-Generation DSL systems. *IEEE Communications Magazine,* Octobre 2002
- **W. YU et al.** An Adaptative Multiuser Power Control Algorithm for VDSL. *GLOBECOM01,* 2001, vol. 1, 394-398